# EUROPÄISCHE PATENTANMELDUNG

(11) **EP 0 837 233 A2**
(43) Veröffentlichungstag der Anmeldung: **22.04.1998**
(21) Anmeldenummer: 97116769.7
(22) Anmeldetag: 26.09.1997
(51) Int. Cl.: F02D 41/14, F02D 41/30

(54) **Verfahren zur Regelung der einstellbaren Betriebsparameter einer direkteinspritzenden Brennkraftmaschine**

(30) Priorität: 16.10.1996 DE 19642654
(71) Anmelder: Daimler-Benz Aktiengesellschaft, 70546 Stuttgart (DE)
(72) Erfinder: Kemmler, Roland, 70619 Stuttgart (DE); Karl, Guenter, 73732 Esslingen (DE); Hohner, Peter, 70771 Leinfelden-Echterdingen (DE); Baur, Bernd, 73732 Esslingen (DE)

(57) **Zusammenfassung**

Bei direkteinspritzenden Brennkraftmaschinen mit in jedem Zylinder einem von einem Kolben begrenzten Brennraum, in den ein Injektor Kraftstoff zur Bildung eines Kraftstoff/Luft-Gemisches einspritzt, welches mit durch einen Einlaßkanal zugeführter Verbrennungsluft bildbar und durch einen zwischen in den Brennraum einragenden Elektroden einer Zündkerze überspringenden Funken zündbar ist, werden für ein zufriedenstellendes Betriebsverhalten der Brennkraftmaschine die einstellbaren Betriebsparameter geregelt.

Um bei der Regelung der einstellbaren Betriebsparameter derart zu verfahren, daß ohne baulichen Aufwand und Änderungen am Aufbau der Brennkraftmaschine in jedem Betriebspunkt individuelle Meßdaten mit informativer Aussage über das Betriebsverhalten der Brennkraftmaschine ermittelt werden, ist erfindungsgemäß vorgesehen, daß der Ionisationsgrad einer im Brennraum gebildeten Plasmawolke gemessen wird und ein daraus gewonnenes Ionenstromsignal einer elektronischen Steuer- oder Reglereinheit zugeführt wird, welche in Abhängigkeit des Ionenstromsignals mindestens einen Betriebsparameter beeinflußt.

## Beschreibung

Die Erfindung betrifft ein Verfahren zur Regelung der einstellbaren Betriebsparameter einer direkteinspritzenden Brennkraftmaschine nach dem Oberbegriff des Anspruchs 1.

In jedem Zylinder solcher Brennkraftmaschinen ist von einem Kolben ein Brennraum begrenzt, in den ein Injektor Kraftstoff einspritzt. Gemeinsam mit durch einen Einlaßkanal dem Brennraum zuführbarer Verbrennungsluft ist ein Kraftstoff/Luft-Gemisch bildbar, welches durch einen zwischen den in den Brennraum einragenden Elektroden einer Zündkerze überspringenden Zündfunken zündbar ist. Dabei ist die Brennkraftmaschine im Teillastbereich mit geschichteten Brennraumladungen betreibbar, welche durch Einspritzung in einer späten Phase des Verdichtungshubes erreichbar sind. Um den Kraftstoffverbrauch und somit den Wirkungsgrad der Brennkraftmaschine zu verbessern, wird abhängig von der Motorbelastung eine innere Gemischbildung mit hohen Lambda-Werten angestrebt, wobei an den Elektroden der Zündkerze ein fettes und somit leicht entzündbares Gemisch bereitgestellt wird und im übrigen Teil des Brennraumes ein mit zunehmender Entfernung von den Elektroden der Zündkerze kraftstoffärmeres Mischungsverhältnis vorliegt. Eine solche Brennkraftmaschine ist aus der DE-OS 43 24 642 A1 bekannt.

Die vergleichsweise geringen NO_{X}- und CO-Emissionen und der hohe Luftüberschuß bei der Schichtverbrennung bringen die Gefahr einer Verschlechterung des Betriebsverhaltens der Brennkraftmaschine durch Zündaussetzer und eine schleppende Verbrennung mit sich. Daher wird ein ruhiges Betriebsverhalten üblicherweise durch eine großzügige Drossel-Regelung der Ansaugluft erreicht, was zu Drosselverlusten der Leistung der Brennkraftmaschine führt. Bekannte Verfahren zur Regelung der einstellbaren Betriebsparameter erfordern weitreichende Änderungen am Aufbau der Brennkraftmaschine, um die laufende Ermittlung von Meßdaten mit Aussage über das Betriebsverhalten der Brennkraftmaschinen zu ermöglichen, welche einer betriebspunktoptimalen Einstellung zugrunde legbar sind.

Aufgabe der Erfindung ist es daher, ein Verfahren zur Regelung der einstellbaren Betriebsparameter der direkteinspritzenden Brennkraftmaschine zu schaffen, bei dem ohne Änderungen am Aufbau der Brennkraftmaschine in jedem Betriebspunkt individuelle Meßdaten mit informativer Aussage über das jeweilige Betriebsverhalten ermittelbar sind, welche der betriebspunktorientierten Einstellung der Betriebsparameter zugrunde legbar sind.

Diese Aufgabe wird durch ein Verfahren mit den Merkmalen des Anspruchs 1 gelöst.

Im Betrieb der Brennkraftmaschine wird das im Brennraum enthaltene Gas ionisiert, wobei der Ionisationsgrad der Plasmawolke veränderlich ist und in jedem Arbeitsspiel in etwa den gleichen Verlauf nimmt. Der Ionisationsgrad der Plasmawolke ist temperaturabhängig und führt zu einer meßbaren Ionenleitung, welche zu einem Ionenstromsignal aufbereitbar ist. Dieses Ionenstromsignal läßt Rückschlüsse auf das Betriebsverhalten der Brennkraftmaschine zu, insbesondere auf das Zünd- und Verbrennungsverhalten der Brennraumladung. Ohne zusätzlichen Bauaufwand ist somit ein in hohem Maße zuverlässiger Betriebsparameter meßbar, weicher von einer entsprechenden elektronischen Steuer- oder Reglereinheit zugrunde gelegt die Möglichkeit bietet, in jedem Betriebspunkt der Brennkraftmaschine die jeweils hinsichtlich vor allem der Schadstoffemissionen, der Laufruhe der Brennkraftmaschine und des Kraftstoffverbrauchs optimalen Betriebsparameter einzustellen.

Die Messung des Ionisationsgrades der Plasmawolke erfolgt vorteilhaft durch einen in den Brennraum und damit in die Plasmawolke einragenden Sensor. Dadurch sind insbesondere auch im Schichtladungsbetrieb der Brennkraftmaschine die jeweiligen Zustandsparameter präzise und zuverlässig meßbar und erlauben die Bereitung eines bezüglich der Laufruhe aussagefähigen Ionenstromsignals. Die Gefahr von Zündaussetzern etwa durch zu hohe Abmagerung des Kraftstoff/Luft-Gemisches im Schichtladungsbetriebs ist somit frühzeitig erkennbar, da in diesem Fall das für das betroffene Arbeitsspiel der Brennkraftmaschine ermittelte Ionenstromsignal von dem bekannten, idealen Ionenstromsignal für diesen Betriebspunkt abweicht.

In einer besonders vorteilhaften Ausgestaltung der Erfindung bilden die Elektroden der Zündkerze den Sensor zur Messung des Ionisationsgrades der Plasmawolke. Für die Ionenstrommessung ist kein baulicher Aufwand notwendig, da die Elektroden der Zündkerze wegen ihrer grundsätzlichen Funktion, nämlich der Zündung des im Brennraum ausgebildeten Kraftstoff/Luft-Gemisches, so weit in den Brennraum einragen, daß die Erfassung eines der Regelung der Betriebsparameter zugrunde legbaren Ionisationsbildes der Plasmawolke ermöglicht ist. Die Ionenstrommessung nahe der thermischen Energiequelle erlaubt dabei die Aufbereitung eines besonders repräsentativen und damit hinsichtlich des Betriebsverhaltens der Brennkraftmaschine aussagefähigen Ionenstromsignals.

Ist eine Rückführung von Abgasen durch eine Abgasrückführungsleitung vom Abgastrakt zum Ansaugtrakt der Brennkraftmaschine vorgesehen, so ist die maximal mögliche Abgasrückführungsrate begrenzbar bei Übereinstimmung des ermittelten Ionenstromsignals mit einem für diesen Fall bekannten Kennwert. Auf diese Weise ist es möglich, im Schichtladungsbetrieb der Brennkraftmaschine die größtmögliche, den Betrieb mit dem angestrebten Grad an Laufruhe zulassende Menge an inerten Abgasen bei der inneren Gemischbildung im Brennraum unter Ersatz der entsprechenden Menge an sauerstoffreicher Frischluft zurückzuführen. Durch die größtmögliche Abgasrückführungsrate bei Vermeidung der Neigung zu Zündaussetzern infolge von Sauerstoffmangel bzw. Abmagerung sind die Schadstoffemissionen der Brennkraftmaschine auf ein Minimum reduzierbar. Insbesondere in den Betriebspunkten mit hohem Luftüberschuß bei der geschichteten Gemischbildung, zum Beispiel im Leerlauf- und Niedriglastbereich oder in der Warmlaufphase der Brennkraftmaschine, werden minimale Mengen an Stickstoffoxiden und Kohlenmonoxyd emittiert und darüber hinaus ist die Möglichkeit einer Regelung der Laufruhe gegeben.

Das erfindungsgemäße Verfahren zur Regelung der einstellbaren Betriebsparameter unter Zugrundelegung des veränderlichen Ionisationsgrades der im Brennraum gebildeten Plasmawolke ist besonders vorteilhaft zum Betrieb einer direkteinspritzenden Otto-Brennkraftmaschine geeignet.

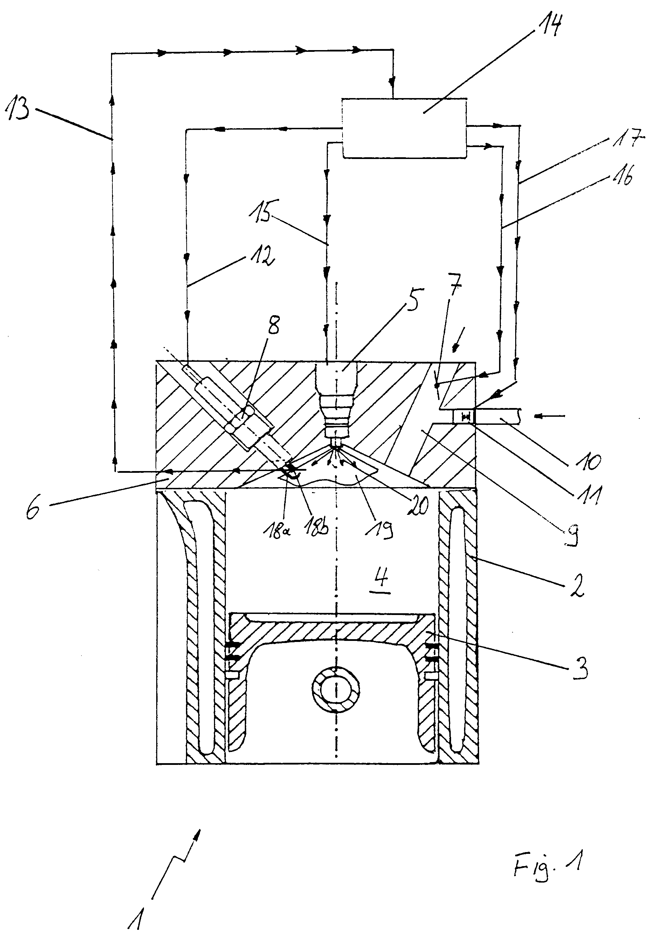

Ein Ausführungsbeispiel der Erfindung ist anhand der Zeichnung nachstehend näher erläutert.

Die einzige Figur zeigt schematisch einen Schnitt durch einen Zylinder 2 einer Brennkraftmaschine 1, in dem ein Kolben 3 längsbeweglich angeordnet ist und einen Brennraum 4 begrenzt. Der Brennraum 4 ist bis in einen kegelförmigen Endabschnitt im Zylinderkopf 6 geführt, welcher den Zylinder 2 verschließt. Im Scheitelpunkt des Brennraums 4 mündet ein den Zylinderkopf 6 durchsetzender Injektor 5 in den Brennraum 4 und spritzt einen kegelförmigen Kraftstoffstrahl 20 ein. Durch einen von einer Drosselklappe 7 beherrschten Einlaßkanal 9 ist dem Brennraum 4 Frischluft zuführbar, welche mit dem direkt eingespritzten Kraftstoff ein Kraftstoff/Luft-Gemisch bildet. Durch den Zylinderkopf 6 ragt eine Zündkerze 8 in den Brennraum 4, deren Elektroden 18a, 18b so weit in den Brennraum 4 geführt sind, daß auch eine geschichtete Brennraumladung mit Kraftstoffeinspritzung im Kompressionshub des Kolbens 3 durch Auslösung eines zwischen den Elektroden 18a, 18b überspringenden Zündfunkens entflammbar ist. Stromab der Drosselklappe 7 mündet eine vom Auslaßtrakt der Brennkraftmaschine geführt Abgasrückführungsleitung 10 in den Einlaßkanal 9, welche von einem regelbaren Abgasrückführungsventil 11 freigebbar ist.

Im Brennraum 4 ist im Betrieb der Brennkraftmaschine 1 eine Plasmawolke 19 gebildet, deren Ionisationsgrad temperaturabhängig ist und somit während eines Arbeitsspiels der Brennkraftmaschine 1 unterschiedlich ist. Der thermische Einfluß auf den Ionisationsgrad der Plasmawolke 19 läßt genaue Rückschlüsse auf das Betriebsverhalten der Brennkraftmaschine 1 zu, insbesondere auf die Qualität der Gemischverbrennung. Eine Ionenstrommessung erfolgt durch die Elektroden 18a, 18b der Zündkerze 8, welche neben ihrer Aufgabe der Auslösung eines Zündfunkens als Sensor für die Erfassung der Ionenleitung in der Plasmawolke 19 funktionieren. Durch ihre Nähe zur thermischen Energiequelle liegt hier ein für die gesamte Plasmawolke 19 repräsentativer Verlauf des Ionisationsgrades vor, da die Plasmawolke 19 hinsichtlich der Ionen-Konzentration ähnlich aufgebaut ist wie das Kraftstoff/Luft-Gemisch hinsichtlich seiner Kraftstoffkonzentration. Im Schichtladungsbetrieb der Brennkraftmaschine 1 ist somit sichergestellt, daß der Sensor der Ionenstrommessung (Elektroden 18a, 18b) durch ihr Einragen in kraftstoffreiche Gemischbereiche auch in einen Bereich der Plasmawolke 19 einragen, welcher für eine aussagefähige Messung ausreichende Ionen-Konzentrationen aufweist.

Die Ionenstrommessung an den Elektroden 18a, 18b der Zündkerze 8 ergeben ein Ionenstromsignal 13, welches einer elektronischen Steuer- oder Reglereinheit 14 zugeführt ist und einer betriebspunktoptimierten Einstellung der Betriebsparameter der Brennkraftmaschine 1 zugrunde gelegt wird. Die Reglereinheit 14 stellt mit einem Abgasrückführungssignal 17 das Abgasrückführungsventil 11 derart ein, daß die für den jeweils vorliegenden Betriebspunkt maximale Abgasrückführungsrate der Abgasrückführungsleitung 10 erreicht ist. Durch die Informationen des Ionenstromsignals über die Laufunruhe der Brennkraftmaschine 1 kann zur Reduzierung der Rohemissionen eine derart große Abgasmenge zurückgeführt werden, daß die ermittelte Laufunruhe der Brennkraftmaschine infolge einer Gemischabmagerung durch erhöhte inerte Abgasanteile einen maximal tolerierbaren Wert nicht überschreitet. Die durch das Ionenstromsignal 13 begrenzte, maximale Abgasrückführungsrate für den jeweils vorliegenden Betriebspunkt erlaubt die mit der Methode der Abgasrückführung maximal erreichbare Reduzierung der Schadstoffemissionen. Um Drosselverluste bei Erhöhung der Abgasrückführungsrate zu vermeiden, ist entsprechend der Öffnungsstellung des Abgasrückführungsventils 11 der Frischluftstrom im Einlaßkanal 9 abhängig von der Stellung der Drosselklappe 7 gedrosselt, wobei sowohl die Einstellung des Abgasrückführungsventils 11 durch ein Abgasrückführungssignal 17 als auch die Einstellung der Drosselklappe 7 durch ein Drosselsignal 16 durch die Reglereinheit 14 in Abhängigkeit von dem Ionenstromsignal 13 erfolgt.

Die Reglereinheit 14 stellt überdies betriebspunktspezifisch die vom Injektor 5 einzuspritzende Kraftstoffmenge sowie den Einspritzzeitpunkt durch ein dem Injektor 5 übermitteltes Einspritzsignal 15 und den Zündzeitpunkt des Kraftstoff/Luft-Gemisches im Brennraum 4 durch Übermittlung eines Zündsignales 12 an die Zündkerze 8 ein.

## Patentansprüche

1. Verfahren zur Regelung der einstellbaren Betriebsparameter einer direkteinspritzenden Brennkraftmaschine (1) mit mindestens einem Zylinder (2) und einem von einem Kolben (3) begrenzten Brennraum (4), in den mittels eines Injektors (5) Kraftstoff eingespritzt, durch einen Einlaßkanal (9) Verbrennungsluft zugeführt und daraus ein Kraftstoff/Luft-Gemisch gebildet wird, welches durch an Elektroden (18a, 18b) einer in den Brennraum (4) einragenden Zündkerze (8) überspringenden Funken zündbar ist, wobei die Brennkraftmaschine (1) in weiten Kennfeldbereichen mit Ladungsschichtung mit Kraftstoffeinspritzung während des Kompressionshubes des Kolbens (3) betrieben wird,
dadurch gekennzeichnet, daß der Ionisationsgrad einer im Brennraum (4) gebildeten Plasmawolke (19) gemessen wird und ein daraus gewonnenes Ionenstromsignal (13) einer elektronischen Steuer- oder Reglereinheit (14) zugeführt wird, welche in Abhängigkeit des Ionenstromsignals (13) mindestens einen Betriebsparameter beeinflußt.

2. Verfahren nach Anspruch 1,
dadurch gekennzeichnet, daß die Messung des Ionisationsgrades durch einen in die Plasmawolke (19) einragenden Sensor erfolgt.

3. Verfahren nach Anspruch 2,
dadurch gekennzeichnet, daß die Elektroden (18a, 18b) der Zündkerze (8) den Sensor zur Ionenstrommessung bilden.

4. Verfahren nach einem der Ansprüche 1 bis 3,
dadurch gekennzeichnet daß ein Kennwert des Ionenstromsignals (13) eine maximale Abgasrückführungsrate durch eine Abgasrückführungsleitung (10) vom Abgastrakt zum Ansaugtrakt der Brennkraftmaschine (1) begrenzt.
